# EUROPÄISCHE PATENTSCHRIFT

(11) **EP 1 518 654 B1**
(45) Veröffentlichungstag und Bekanntmachung des Hinweises auf die Patenterteilung: **14.05.2008**
(21) Anmeldenummer: 04021687.1
(22) Anmeldetag: 13.09.2004
(51) Int. Cl.: B29C 44/32, B29C 67/24, B32B 15/08, B32B 5/20

(54) **Verfahren zur Herstellung von Polyurethan Sandwichelementen**
Process for manufacturing polyurethane sandwich panels
Procédé de fabrication de panneaux sandwich constitués de polyuréthane

(30) Priorität: 22.09.2003 DE 10343745
(43) Veröffentlichungstag der Anmeldung: 30.03.2005
(73) Patentinhaber: Hennecke GmbH, 51379 Leverkusen (DE)
(72) Erfinder: Begemann, Michael, Dr., 92272 Freudenberg-Lintach (DE); Wirth, Jürgen, 51147 Köln (DE); Raffel, Rainer, 53721 Siegburg (DE)
(74) Vertreter: Gosdin, Michael

(56) Entgegenhaltungen:
- EP-A- 0 728 574
- EP-A- 0 940 249
- EP-B- 0 025 084
- WO-A-00/03858
- DE-A- 2 330 678
- DE-B- 1 167 520
- FR-A- 2 003 281
- GB-A- 1 369 641
- US-A- 4 035 529
- US-A- 4 925 719
- US-A- 6 042 765
- US-B1- 6 228 296
- PATENT ABSTRACTS OF JAPAN Bd. 0071, Nr. 73 (M-232), 30. Juli 1983 (1983-07-30) & JP 58 076239 A (MATSUSHITA DENKO KK), 9. Mai 1983 (1983-05-09)
- GELLHORN VAN E: "SANDWICH STRUCTURE SUCCESS DEPENDS ON PROCESS CONFORMITY WITH REQUIREMENTS" COMPOSITES MANUFACTURING, BUTTERWORTH SCIENTIFIC, GUILDFORD, SURREY, GB, Bd. 3, Nr. 3, Januar 1992 (1992-01), Seiten 183-188, XP000349832 ISSN: 0956-7143

## Beschreibung

Die Erfindung betrifft ein Verfahren zur Herstellung von Polyurethan-Sandwichelementen (sogenannten Panels) bei dem das Polyurethan-Reaktionsgemisch sowohl auf die obere als auch auf die untere Deckschicht aufgetragen wird und die mit Polyurethan-Reaktionsgemisch benetzten Deckschichten anschließend miteinander in Kontakt gebracht werden.

EP-A-940 249 lehrt ein Verfahren zur Herstellung von Polyurethan-Sandwichelementen, bei dem das flüssige Polyurethan-Reaktionsgemisch auf die untere Deckschicht aufgegeben wird.

US-A-4,035,529 offenbart ein Verfahren zur Beschichtung von Teppichrücken, bei dem ein Polyurethan-Reaktionsgemisch auf die Oberseite der oberen Deckschicht aufgegeben wird. Der mit dem Polyurethan-Reaktionsgemisch benetzte Teppich muss dann über eine Rolle umgelenkt werden, so dass die mit Polyurethan-Reaktionsgemisch benetzte Seite des Teppichs anschließend nach unten zeigt.

DE-B-1 167 520 offenbart ein zweistufiges Verfahren zur Herstellung von mit dünnen Polyurethan-Schaumstofflagen beschichteten Schichtträgern, bei denen der Schichtträger beidseitig von Polyurethan-Schaum umgeben ist.

DE-A-23 30 678 offenbart ein Verfahren zur Herstellung von Polyurethan enthaltenden Sandwich-Bauplatten, bei dem eine Verstärkungseinlage aus Wellpappe beidseitig von Polyurethan-Schaum umgeben ist.

EP-A-728 574 offenbart ein Verfahren zur Herstellung von Sandwich-Strukturelementen aus Polyurethan, bei dem flüssiges Polyurethan-Reaktionsgemisch auf die untere Deckschicht aufgegeben wird.

DE-A- 197 27 129 offenbart ein Verfahren zur Herstellung von geschäumten Dach- und Wandelementen, bei dem die untere Deckschicht mit Polyurethan-Reaktionsgemisch beaufschlagt wird, und das aufschäumende Polyurethan-Reaktionsgemisch dann mit einer zweiten Deckschicht von oben abgedeckt wird.

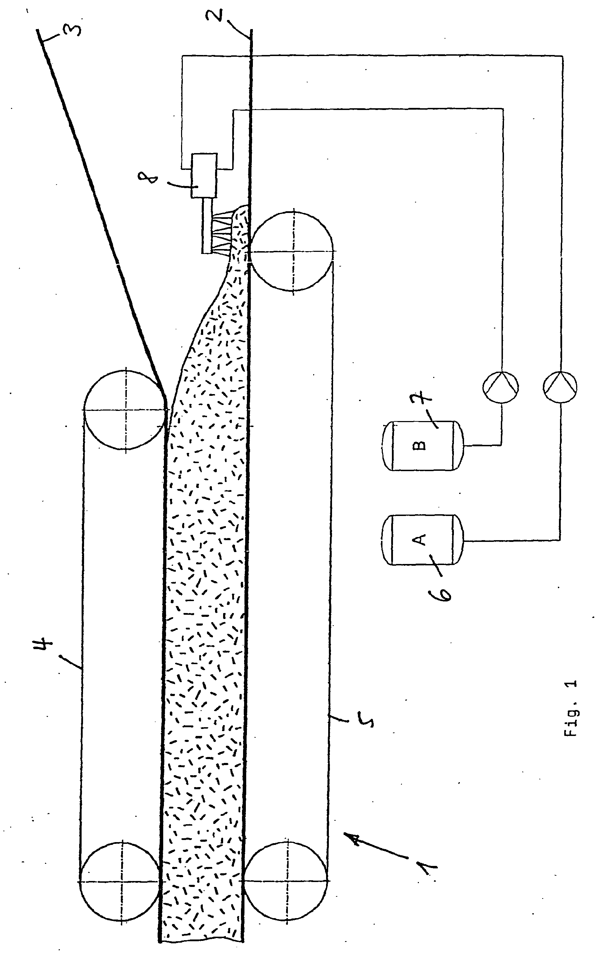

Die Herstellung von Polyurethan-Sandwichelementen (Panels) erfolgt im Allgemeinen in einem kontinuierlichen Prozess. Dabei werden die Panels endlos auf sogenannten Contimaten in Dicken von in der Regel ca. 20 bis 200 mm hergestellt. Dicken von unter 20 mm und über 200 mm sind aber ebenfalls möglich. Ein solcher Contimat besteht dabei üblicherweise aus einem umlaufenden Oberband zur Führung der oberen Deckschicht, einem umlaufenden Unterband zur Führung der unteren Deckschicht, einer Zufuhreinrichtung für die obere Deckschicht, einer Zuführeinrichtung für die untere Deckschicht, einer Formstrecke, innerhalb derer das Polyurethan-Reaktionsgemisch zwischen der oberen Deckschicht und der unteren Deckschicht aufschäumt und ausreagiert, einer Ablängeinrichtung für das hergestellte Panel sowie einer Dosierstation mit einem Mischkopf zum Auftragen der Polyurethan-Reaktionsmischung auf die untere Deckschicht. Ein Contimat nach dem Stand der Technik ist in Figur 1 dargestellt.

Bei Panels mit Blech-Deckschichten befindet sich üblicherweise zwischen der oberen und der unteren Deckschicht eine Polyurethan-Schicht mit einer Rohdichte von 45 ± 5 kg/m³. Dabei ist es jedoch wünschenswert, möglichst niedrige Rohdichten von beispielsweise 40 kg/m³ oder beispielsweise von sogar nur 38 kg/m³ einzustellen, um die Menge der verbrauchten Einsatzstoffe zu minimieren.

Aus verschiedenen Gründen treten dabei jedoch technische Probleme auf. Zum einen ist die vollständige Verfüllung der umgekanteten Randzonen von Blechdeckschichten bei niedriger Rohdichte unzureichend. Zum anderen ist bei dünnen, beispielsweise 20 mm dicken Panels insbesondere bei höheren Bandgeschwindigkeit von beispielsweise oberhalb 30 m / min die Verteilung des Polyurethan-Reaktionsgemisches bei niedriger Rohdichte ungleichmäßig. In beiden Fällen ergeben sich dadurch Panels minderer Qualität oder Ausschuss. Ein weiteres Problem ist die geringe Haftung zwischen dem Polyurethan-Schaum und der oberen Blechdeckschicht bei niedrigen Rohdichten, was wiederum zu Panels von minderer Qualität oder Ausschuss führen kann.

Um diese Probleme zu vermeiden, werden die Panels mit erhöhten Rohdichten von üblicherweise 45 bis 50 kg/m³ hergestellt, sogenanntes "Overpacking". Bei dem "Overpacking" wird der Massenstrom an Polyol, Isocyanat, Treibmittel und damit an Polyurethan-Schaum und vor allem auch der Schäumdruck erhöht, wodurch eine ausreichende Verfüllung der umgekanteten Randzonen möglich ist. Der erhöhte Schäumdruck resultiert dabei aus den erhöhten Mengen an Polyurethan-Reaktionsgemisch und Treibmittel, das zum Aufschäumen des Polyurethan-Schaums und damit zum Druckaufbau in dem abgeschlossenen Raum zwischen der oberen und der unteren Deckschicht in der Formstrecke führt. Bei höherem Massenstrom wird natürlich auch die Verteilung des Polyurethan-Reaktionsgemisches auf der unteren Deckschicht besser. Auch die Haftung an der oberen Blechdeckschicht wird durch den größeren Massenstrom, vor allem aber durch den höheren Schäumdruck ebenfalls verbessert.

Die Aufgabe der vorliegenden Erfindung besteht daher darin, ein einfaches und wirtschaftliches Verfahren und eine geeignete Vorrichtung zur Herstellung von Polyurethan-Sandwichelementen mit niedrigen Rohdichten von beispielsweise 38 bis 40 kg/m³ zur Verfügung zu stellen.

Die Erfindung betrifft ein Verfahren zur kontinuierlichen Herstellung von Polyurethan-Sandwichelementen enthaltend eine obere Deckschicht und eine untere Deckschicht und eine dazwischen liegende, mit den Deckschichten fest verbundene Schicht aus zelligem Polyurethan, bei dem
a) die beiden Deckschichten kontinuierlich in Längsrichtung gefördert werden, so dass zwischen den Deckschichten ein in Längsrichtung der Deckschichten ausgedehnter Spalt entsteht, und
b) die Polyurethan-Reaktionsmischung von oben auf die Oberseite der unteren Deckschicht und von unten auf die Unterseite der oberen Deckschicht anteilig aufgetragen wird,
c) anschließend die Deckschichten mit dem Polyurethan-Reaktionsgemisch in einer Formstrecke geführt werden, in der die Dicke des Polyurethan-Sandwichelements eingestellt wird und in der das Polyurethan-Reaktionsgemisch ausreagiert, und
d) anschließend das ausreagierte Polyurethan-Sandwichelement abgezogen wird,
dadurch gekennzeichnet, dass das Verhältnis des Massenstroms des auf die obere Deckschicht aufgetragenen Polyurethan-Reaktionsgemisches zu dem Massenstrom des auf die untere Deckschicht aufgetragenen Polyurethan-Reaktionsgenüsches zwischen 0,001 und 0,2, bevorzugt zwischen 0,002 und 0,1 und besonders bevorzugt zwischen 0,005 und 0,05 liegt,
und wobei die Dicke des auf die des oberen Deckschicht aufgetragenen Films an Polyurethan-Reaktionsgemisch so gewählt wird, dass ein Abtropfen des Polyurethan-Reaktionsgemisches von der oberen Deckschicht auf die untere Deckschicht vermieden wird.

Da in dem erfindungsgemäßen Verfahren das flüssige Polyurethan-Reaktionsgemisch auch auf die obere Deckschicht aufgetragen wird, werden die umgekanteten Randzonen auch im Oberblech einwandfrei gefüllt. Gleichzeitig wird dadurch eine ungleichmäßige Verteilung des Polyurethan-Reaktionsgemisches auf der unteren Deckschicht ausgeglichen. Auch die Haftung des Polyurethan-Schaums an der oberen Deckschicht wird durch die flüssige Benetzung gravierend verbessert.

Das Massenverhältnis des auf die obere und die untere Deckschicht aufgetragenen Polyurethan-Reaktionsgemisches und damit die Dicke des auf die Unterseite der oberen Deckschicht aufgetragenen Films an Polyurethan-Reaktionsgemisch sind für das erfindungsgemäße Verfahren von entscheidender Bedeutung. Denn die Dicke des Films muss entsprechend den Adhäsions- bzw. Kohäsionskräften so gewählt werden, dass ein Abtropfen des Polyurethan-Reaktionsgemisches von der oberen Deckschicht auf die untere Deckschicht vermieden wird. Ansonsten entstehen Fehlstellen im Panel und damit Ausschuss.

Die vorzugsweise erzeugten Filmdicken des auf die Unterseite der oberen Deckschicht aufgetragenen flüssigen Polyurethan-Reaktionsgemisches liegen im Bereich von 10 bis 450 µm, besonders bevorzugt im Bereich von 50 bis 300 µm, ganz besonders bevorzugt im Bereich von 100 bis 200 µm. Diese Dicken können um den Faktor 1,5 bis 5 erhöht werden, wenn das Polyurethan-Reaktionsgemisch angefrotht wird, das heißt beispielsweise 0,1 bis 4 Gewichtsteile CO₂ pro 100 Teilen Polyurethan-Reaktionsgemisch enthält

Um eine einwandfreie Haftung zu gewährleisten, werden die mit dem Polyurethan-Reaktionsgemisch in Kontakt stehenden Oberflächen vorzugsweise vor dem Aufbringen des Polyurethan-Reaktionsgemischs gesäubert und entfettet. Um die Adhäsionskräfte noch weiter zu erhöhen, ist auch eine zusätzliche chemische oder elektrochemische Vorbehandlung oder der Auftrag eines Haftvermittlers vor dem Aufbringen des Polyurethan-Reaktionsgemischs möglich.

Polyurethan-Sandwichelemente (Panels) haben häufig stark strukturierte untere und gegebenenfalls auch obere Deckschichten. Dabei werden in den Verfahren zur Herstellung der Panels grundsätzlich die mit tieferen Strukturen versehenen Deckschichten unten geführt, damit das Polyurethan-Reaktionsgemisch durch den Einfluss der Schwerkraft leicht in die Strukturen eindringen und diese komplett ausfüllen kann. Durch das erfindungsgemäße Verfahren gelingt es, jetzt auch die in der oberen Deckschicht vorhandenen Oberflächen komplett mit Polyurethan-Reaktionsgemisch zu füllen, bevor die Deckschichten in der Formstrecke zusammengeführt werden.

In einer bevorzugten Ausführungsform wird die Polyurethan-Reaktionsmischung auf die obere Deckschicht mit einem Sprühmischkopf aufgetragen und die Sprühzone durch Folien oder Papierbahnen abgegrenzt, so dass der entstehende Streunebel aufgefangen wird. Die Sprühzone ist dabei der Raum unterhalb der oberen Deckschicht, in dem die durch das Sprühen entstehenden Streunebel entstehen. Die Folien oder Papierbahnen sind dabei im Wesentlichen flächenparallel zur oberen Deckschicht angeordnet. Die Folien bzw. Papierbahnen werden bevorzugt mit einem durchschnittlichen Vorschub von 0,1 bis 10 m / h, besonders bevorzugt von 0,5 bis 5 m/h und ganz besonders bevorzugt von 0,1 bis 3 m / h parallel zur oberen Deckschicht und vorzugsweise senkrecht zur Bewegungsrichtung der oberen Deckschicht bewegt. Vorzugsweise werden die Streuaerosole oder Streunebel dabei an den Schmalseiten der Sprühzone abgesaugt.

Der Sprühmischkopf oszilliert bevorzugt quer zur Bewegungsrichtung der oberen Deckschicht. Bei relativ niedrigen Transportgeschwindigkeiten ( < 30 m / min) der Deckschichten kann der Sprühmischkopf über der gesamten Breite des Sprühbereichs traversieren. Bei höheren Geschwindigkeiten der Deckschichten werden die Beschleunigungen in den Wendepunkten jedoch sehr hoch.

Daher kann die translatorische Fahrstrecke des Sprühmischkopfes quer zur Bewegungsrichtung der oberen Deckschicht bevorzugt eingestellt werden. Der Sprühmischkopf oszilliert dann bevorzugt lediglich in einem verkürzten, beispielsweise mittels Linearmaßstab eingestellten Bereich. An den Endpunkten der Fahrstrecke wird der Sprühmischkopf dann in Richtung der Fahrstrecke nach außen geschwenkt, so dass auch die Randbereiche der oberen Deckschicht besprüht werden, ohne den Sprühmischkopf bis an den Rand der oberen Deckschicht fahren zu müssen.

Der umgekantete Rand, wie er beispielsweise bei Blechdeckschichten auftritt, wird dabei vorher durch eine Schutzfolie abgedeckt, die nach Fertigstellung des Panels wieder abgezogen wird.

In der Regel werden auf die untere und auf die obere Deckschicht ein Polyurethan-Reaktionsgemisch gleicher Zusammensetzung aufgebracht. Dann können die der oberen und der unteren Deckschicht zugeordneten Mischköpfe aus den gleichen Arbeitsbehältern mit den reagierenden Komponenten Isocyanat und Polyol versorgt werden. Dabei sind zwei Varianten möglich: Entweder wird für jeden Mischkopf und jede Komponente eine eigene Dosierpumpe bereitgestellt oder beide Mischköpfe werden für eine Komponente durch eine gemeinsame Dosierpumpe versorgt, wobei dann die Massenströme für jeden Mischkopf durch einen der Dosierpumpe nachgeschalteten Mengenteiler eingestellt werden. Dabei sind die Dosierpumpen und die Mengenteiler bevorzugt verstellbar.

Als Mengenteiler können beispielsweise Zahnradstromteiler eingesetzt werden.

In die Reaktionskomponenten kann vor ihrer Vermischung auch ein Hilfsstoff injiziert werden. Beispielsweise kann in die Polyolkomponente, die zu dem der unteren Deckschicht zugeordneten Mischkopf gefördert wird, ein Katalysator zugegeben werden, um die Geschwindigkeit der Polyurethan-Reaktion zu beeinflussen. Dadurch ist es möglich, die Geschwindigkeit der Polyurethanbildung auf der unteren Deckschicht gegenüber der auf der oberen Deckschicht zu beschleunigen.

Dies kann aus folgendem Grund erforderlich sein: Der Winkel, den die obere und die untere Deckschicht beim Einlauf in die Formstrecke bilden, ist in der Regel relativ klein. Deshalb müssen die beiden Mischköpfe aus konstruktiven Gründen hintereinander angeordnet werden. In der Regel wird dabei der Mischkopf, mit dem die obere Deckschicht mit Polyurethan-Reaktionsgemisch beaufschlagt wird, in Transportrichtung der Deckschichten vor dem Mischkopf, mit dem die untere Deckschicht mit Polyurethan-Reaktionsgemisch beaufschlagt wird, angeordnet. Um zu erreichen, dass die Polyurethan-Reaktionsgemische auf der oberen und der unteren Deckschicht in etwa zeitgleich reagieren und aufschäumen, muss daher die Reaktion des Polyurethan-Reaktionsgemisches auf der unteren Deckschicht beschleunigt werden.

In einer besonders bevorzugten Ausführungsform des Verfahrens werden die Startzeiten (auch Liegezeiten oder cream-time genannt) der Polyurethan-Reaktionsgemische auf der oberen und der unteren Deckschicht so eingestellt, dass die Polyurethan-Reaktionsmischung auf der oberen Deckschicht in etwa dann startet, wenn der aus der Polyurethan-Reaktionsmischung auf der unteren Deckschicht entstehende Schaum die obere Deckschicht erreicht.

Bevorzugt kann der gesamte Sprühbereich, das heißt der der oberen Deckschicht zugeordnete Sprühmischkopf und gegebenenfalls die Folien oder Papierbahnen, in Produktionspausen bzw. nach Produktionsende weggefahren bzw. weggeschwenkt werden.

In einer alternativen Ausführungsform wird das Polyurethan-Reaktionsgemisch im Tauchverfahren auf die obere Deckschicht aufgebracht. Dieses Verfahren ist insbesondere bei ebenen oberen Deckschichten vorteilhaft, weil dann das Polyurethan-Reaktionsgemisch in einem dünnen Film auf die obere Deckschicht aufgebracht werden kann. Dabei müssen die Seiten der oberen Deckschichten zunächst mit einer Schutzfolie abgedeckt sein, die vor dem Zusammenbringen mit der unteren Deckschicht abgezogen werden.

Die Erfindung betrifft weiterhin eine Vorrichtung nach Anspruch 10 zur kontinuierlichen Herstellung von Polyurethan-Sandwichelementen enthaltend eine obere Deckschicht, eine untere Deckschicht und eine dazwischen liegende, mit den Deckschichten fest verbundene Schicht aus zelligem Polyurethan, umfassend ein umlaufendes Oberband zur Führung der oberen Deckschicht, ein umlaufendes Unterband zur Führung der unteren Deckschicht, eine Zuführeinrichtung für die obere Deckschicht, eine Zuführeinrichtung für die untere Deckschicht, eine Ablängeinrichtung für die Polyurethan-Sandwichelemente, einen oberhalb der unteren Deckschicht angeordneten ersten Mischkopf zum Auftragen des Polyurethan-Reaktionsgemisches auf die untere Deckschicht und einen unterhalb der oberen Deckschicht angeordneten zweiten Mischkopf zum Auftragen des Polyurethan-Reaktionsgemisches auf die obere Deckschicht, eine Dosiereinrichtung zur Dosierung der Reaktionskomponenten zu dem ersten Mischkopf und zu dem zweiten Mischkopf sowie Leitungen zwischen der Dosiereinrichtung und dem ersten und dem zweiten Mischkopf, wobei der zweite Mischkopf ein Sprühmischkopf ist und wobei die Sprühzone, in der die durch das Sprühen verursachten Streunebel entstehen, durch Folien oder Papierbahnen zur Umgebung hin abgegrenzt ist.

Als zweiter Mischkopf wird ein Sprühmischkopf eingesetzt, der unterhalb der oberen Deckschicht angeordnet ist und dessen Auslaufkanal und Sprühdüse gegen die Unterseite der oberen Deckschicht gerichtet ist. Zwar ist es grundsätzlich möglich, auch die obere Deckschicht von oben mit Polyurethan-Reaktionsgemisch zu beaufschlagen. Aufgrund der in der oberen Deckschicht häufig vorhandenen Oberflächenstrukturen (Sicken), welche die Flexibilität der oberen Deckschicht stark einschränken und welche die obere Deckschicht somit starr machen, kann die obere Deckschicht bei Vorliegen solcher Oberflächenstrukturen aber nicht mehr umgelenkt werden. Daher wird erfindungsgemäß vorgesehen, die obere Deckschicht von unten mit einem Sprühmischkopf mit Polyurethen-Reaktionsgemisch zu besprühen. Die erfindungsgemäße Vorrichtung kann daher sehr flexibel für glatte obere Deckschichten und für oberflächenstrukturierte obere Deckschichten eingesetzt werden. Außerdem wird durch den Einsatz eines Sprühmischkopfes erreicht, dass die obere Deckschicht sehr gleichmäßig und homogen beschichtet werden kann.

Sprühmischköpfe zeichnen sich dadurch aus, dass mit ihnen das auszutragende Polyurethan-Reaktionsgemisch zerstäubt und mit erhöhter Geschwindigkeit ausgetragen werden kann. Die Sprühmischköpfe weisen dabei im Allgemeinen eine Mischeinrichtung auf, mit welcher die zu vermischenden Polyurthan-Reaktionskomponenten vermischt werden können. Geeignete Mischeinrichtungen sind beispielsweise Rührermischer, Düsenmischer, Gegenstrominjektionsmischer oder Statikmischer. Der Mischeinrichtung nachgeschaltet ist eine Sprüheinrichtung, beispielsweise eine Sprühdüse. Dabei sind sowohl Sprühdüsen geeignet, die ohne Luftunterstützung betrieben werden als auch Sprühdüsen, bei denen dem Polyurethan-Reaktionsgemisch vor der Sprühdüse Luft oder Stickstoff zugemischt werden kann. Durch die hinter solchen Sprühdüsen dann sich entwickelnde Gasexpansion wird das Sprühen unterstützt. Besonders das Sprühen mit Luft oder Stickstoff führt jedoch zu einer verstärkten Aerosolbildung. Oberhalb von ca. 500 mPas ist ein Sprühen praktisch nur noch mit Luft- oder Stickstoff-Unterstützung möglich.

Bei dem Sprühen des Polyurethan-Reaktionsgemisches entstehen Streuaerosole oder Streunebel, die sich in der Umgebung verbreiten und auf Dauer zu einer starken Verschmutzung führen. Aus diesem Grund ist die Sprühzone, in der die durch das Sprühen verursachten Streunebel entstehen, durch Folien oder Papierbahnen zur Umgebung hin abgegrenzt.

Bevorzugt sind die Folien bzw. Papierbahnen bevorzugt kontinuierlich oder intermittierend mit einem durchschnittlichen Vorschub von 0,1 bis 10 m / h beweglich.

Weiter bevorzugt sind die Folien oder Papierbahnen parallel oder im Wesentlichen parallel zur oberen Deckschicht angeordnet. Zusätzlich sind an den offenen Schmalseiten der Sprühzone bevorzugt Absaugvorrichtungen angeordnet. Die in etwa parallel zur oberen Deckschicht angeordneten Folien oder Papierbahnen und die an den Schmalseiten der Sprühzone angeordneten Absaugvorrichtungen bilden dann eine in alle Raumrichtungen zur Umgebung hin abgegrenzte Sprühkabine.

In einer vorteilhaften Ausführungsform des Verfahrens ist der zweite Mischkopf quer zur Bewegungsrichtung der oberen Deckschicht oszillierbar, wobei die translatorische Fahrstrecke des zweiten Mischkopfs z. B. mittels eines Linearmaßstabs einstellbar ist. Bevorzugt ist der zweite Mischkopf an den Endpunkten der Fahrstrecke nach außen in Richtung der Fahrstrecke schwenkbar, so dass beim Sprühen auch die Randbereiche der oberen Deckschicht besprüht werden können, ohne den Sprühmischkopf bis an den Rand der oberen Deckschicht fahren zu müssen.

In einer weiteren Ausführungsform sind der zweite Mischkopf und die Folien oder Papierbahnen, mit denen der Sprühbereich eingegrenzt wird, wegfahrbar oder wegschwenkbar.

Bevorzugt enthält die Dosiereinrichtung für jede Reaktionskomponente nur ein gemeinsames Dosieraggregat, mit dem die Reaktionskomponente zum ersten und zum zweiten Mischkopf gefördert wird, und einen Mengenteiler, mit dem der dosierte Massenstrom an Reaktionskomponente auf den ersten und den zweiten Mischkopf verteilt werden. Bevorzugt sind die Dosieraggregate, beispielsweise Dosierpumpen, und die Mengenteiler einstellbar.

Als Mengenteiler können beispielsweise Zahnradstromteiler eingesetzt werden.

In einer Ausführungsform des Verfahrens sind in den Leitungen zwischen der Dosiereinrichtung und dem ersten und / oder dem zweiten Mischkopf Mittel zur Einleitung oder Injektion zusätzlicher Hilfsstoffe angeordnet. Geeignet sind beispielsweise Druck- oder servogesteuerte Düsen oder einfache Ventile. Wesentlich ist dabei, dass sie bei Dosierstopp einen einwandfreien Verschluss der Injektionsstelle gewährleisten. Dann kann beispielsweise ein Katalysator in die Polyolkomponente zugegeben werden, um die Geschwindigkeit der Polyurethan-Reaktion zu beeinflussen.

Die Erfindung wird nachstehend anhand der folgenden Abbildungen näher erläutert. Es zeigen
- Figur 1: eine Vorrichtung zur Herstellung von Polyurethan-Sandwichelementen nach dem Stand der Technik
- Figur 2: eine erfindungsgemäße Vorrichtung zur Herstellung von Polyurethan-Sandwichelementen, bei dem der zweite Mischkopf als Sprühmischkopf ausgebildet ist
- Figur 3: eine erfindungsgemäße Vorrichtung zur Herstellung von Polyurethan-Sandwichelementen, bei dem der zweite Mischkopf als Sprühmischkopf ausgebildet ist und die Sprühzone durch eine mobile Sprühkabine eingegrenzt ist.
- Figur 4: einen Schnitt A - A durch die mobile Sprühkabine
- Figur 5: einen Schnitt B - B durch die mobile Sprühkabine

Figur 1 zeigt eine Vorrichtung 1 zur Herstellung von Polyurethan-Sandwichelementen nach dem Stand der Technik. Dabei werden eine untere Deckschicht 2 und eine obere Deckschicht 3 kontinuierlich durch entsprechende Zuführeinrichtungen (nicht dargestellt) in den in Längsrichtung ausgedehneten Spalt zwischen dem umlaufenden Oberband 4 und dem umlaufenden Unterband 5, der sogenannten Formstrecke, gefördert und darin geführt.

Die Polyolkomponente A und die Isocyanatkomponente B werden aus den jeweils zugeordneten Arbeitsbehältern 6 und 7 über zugeordnete Pumpen und Leitungen zum Mischkopf 8 gefördert, dort vermischt und das dabei entstehende Polyurethan-Reaktionsgemisch auf die untere Deckschicht 2 aufgebracht, indem der Mischkopf 8 quer zur Transportrichtung über der Breite der unteren Deckschicht 2 traversiert. Das auf der unteren Deckschicht 2 aufgebrachte Polyurethan-Reaktionsgemisch schäumt auf und wird durch die Längsbewegung der unteren Deckschicht 2 in die Formstrecke transportiert, die von dem umlaufenden Oberband 4 und dem umlaufenden Unterband 5 aufgespannt wird. In der Formstrecke schäumt und reagiert das Polyurethan-Reaktionsgemisch zwischen der oberen Deckschicht 3 und der unteren Deckschicht 2 aus, so dass nach Durchlaufen der Formstrecke ein Polyurethan-Sandwichelement erhalten wird, das anschließend abgelängt und weiterbearbeitet werden kann.

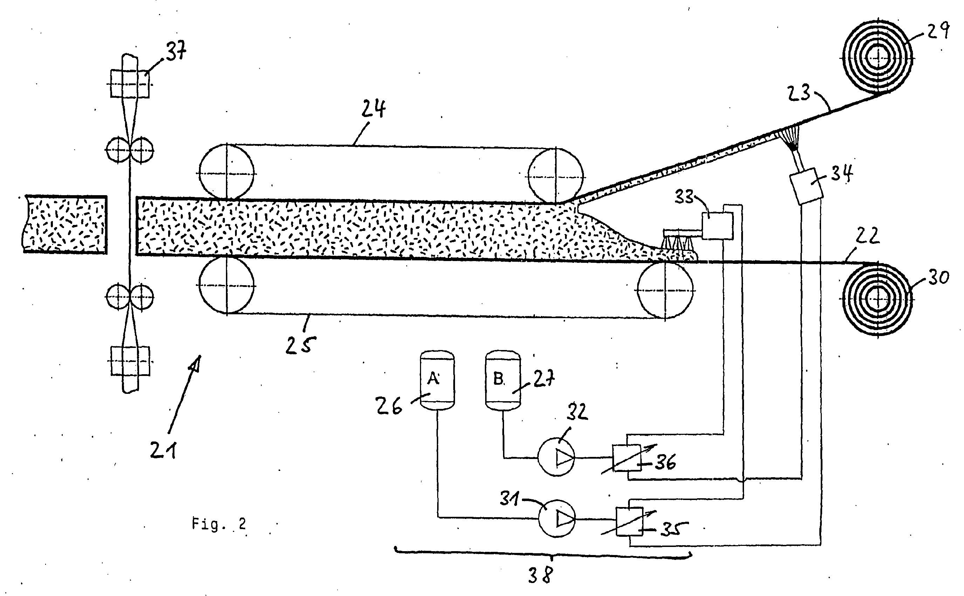

In Figur 2 ist ein Vorrichtung 21 zur Durchführung des erfindungsgemäßen Verfahrens zur Herstellung von Polyurethan-Sandwichelementen dargestellt, bei dem die obere Deckschicht 23 mit einem Sprühmischkopf 34 mit Polyurethan-Reaktionsgemisch besprüht wird. Dabei werden die untere Deckschicht 22 und die obere Deckschicht 23 kontinuierlich durch entsprechend zugeordnete Zuführeinrichtungen 29 und 30 in den in Längsrichtung ausgedehnten Spalt zwischen dem umlaufenden Oberband 24 und dem umlaufenden Unterband 25 gefördert und darin geführt.

Die Polyolkomponente A und die Isocyanatkomponente B werden aus den jeweils zugeordneten Arbeitsbehältern 26 und 27 über zugeordnete Pumpen 31 und 32 und entsprechende Leitungen zu dem der unteren Deckschicht zugeordneten Mischkopf 33 und dem der oberen Deckschicht zugeordneten Mischkopf 34 gefördert, dort jeweils vermischt und das dabei entstehende Polyurethan-Reaktionsgemisch auf die untere Deckschicht 22 bzw. auf die oberen Deckschicht 23 aufgebracht. Der Mischkopf 34 ist dabei als Sprühmischkopf ausgebildet. Die Förderung der Komponenten A erfolgt dabei in der Weise, dass die Komponente A durch die Pumpe 31 zu einem verstellbaren Mengenteiler 35 gefördert wird, dort im eingestellten Verhältnis geteilt wird und über entsprechend zugeordnete Leitungen dem unteren Mischkopf 33 bzw. dem oberen Mischkopf 34 zugeführt wird. In analoger Weise wird die Komponente B durch Dosierpumpe 32 zu dem verstellbaren Mengenteiler 35 gefördert, dort geteilt und dem oberen und unteren Mischkopf zugeführt.

Das auf der unteren Deckschicht 22 und der oberen Deckschicht 23 aufgebrachte Polyurethan-Reaktionsgemisch schäumt auf und wird durch die Längsbewegung der Deckschicht 22 und 23 in die Formstrecke transportiert, die von dem umlaufenden Oberband 24 und dem umlaufenden Unterband 25 aufgespannt wird.

In der Formstrecke schäumt und reagiert das Polyurethan-Reaktionsgemisch zwischen der oberen Deckschicht 23 und der unteren Deckschicht 22 aus, so dass nach Durchlaufen der Formstrecke ein Polyurethan-Sandwichelement erhalten wird, das anschließend in der Ablängeinrichtung 37 abgelängt wird.

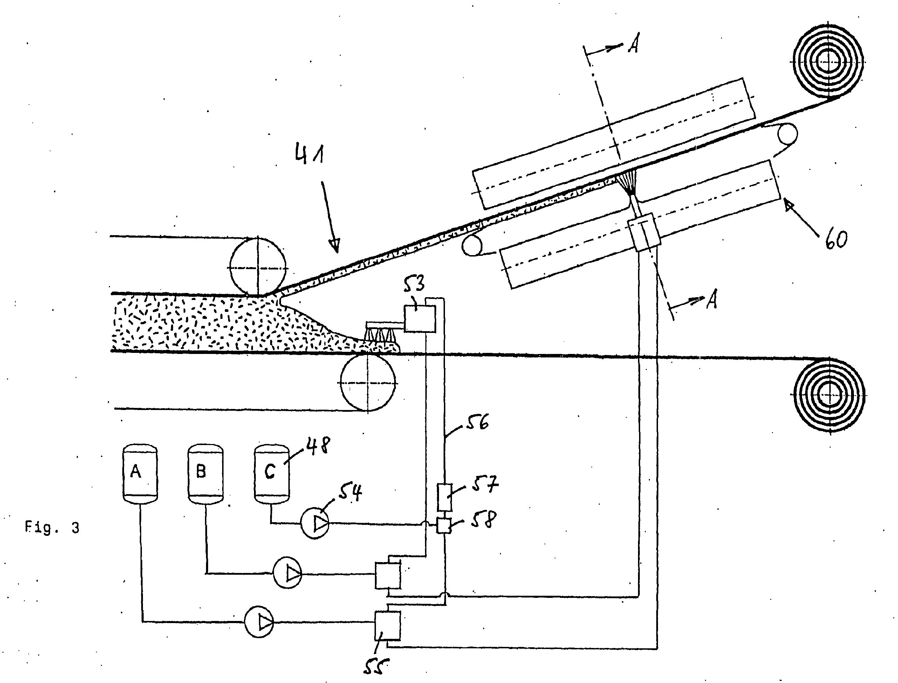

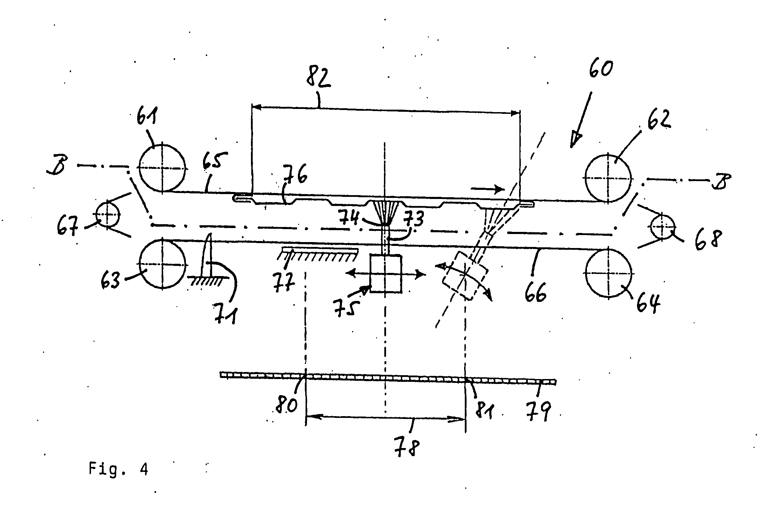

Figur 3 zeigt eine vorteilhafte Ausführungsform der in Figur 2 dargestellten Vorrichtung. Die erfindungsgemäße Vorrichtung 41 enthält zusätzlich einen Vorratsbehälter 48 für den Hilfsstoff C, beispielsweise einen Katalysator. Der Hilfsstoff C wird über Dosierpumpe 54 in die Leitung 56, die zwischen dem Mengenteiler 55 für die Komponente A und dem der unteren Deckschicht zugeordneten Mischkopf 53 verläuft, dosiert und darin mittels des statischen Mischers 57 in die Komponente A eingemischt. Die Einleitung des Hilfsstoffs C in die Leitung 56 erfolgt dabei beispielsweise mittels einer servogesteuerten Düse 58. In Figur 3 ist weiterhin die mobile Sprühkabine 60 dargestellt, durch welche die Sprühzone, in der die durch das Sprühen verursachten Streunebel entstehen, durch Folien oder Papierbahnen zur Umgebung hin abgegrenzt sind. Die mobile Sprühkabine 60 ist in den Figuren 4 (Schnitt A - A) und 5 (Schnitt B - B) im Detail dargestellt.

In Figur 4 ist der Schnitt A - A der in der Figur 3 dargestellten Sprühkabine 60 gezeigt. Die Sprühkabine 60 weist eine obere Abwickelrolle 61 und eine untere Abwickelrolle 63 sowie eine obere Aufwickelrolle 62 und eine untere Aufwickelrolle 64 für die oberen bzw. unteren Folien oder Papierbahnen 65, 66 auf. An den Schmalseiten der mobilen Sprühkabine 60 sind Absaugvorrichtungen 67, 68 für das Absaugen der beim Sprühen entstehenden Streuaerosole angeordnet.

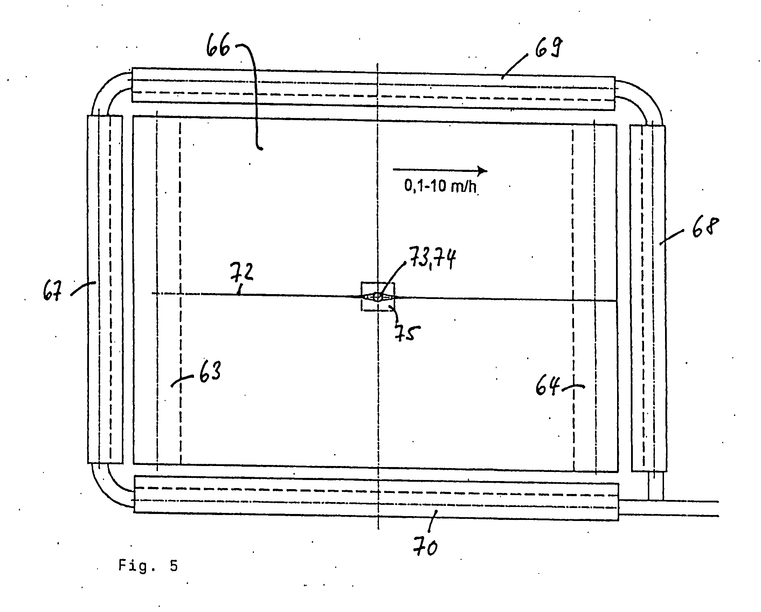

Die untere Folie oder Papierbahn 66 wird mittels eines feststehenden Messers 71 in etwa in der Mitte aufgetrennt, so dass ein Schlitz (Schlitz 72 in Figur 5) entsteht, in dem das Auslaufrohr 73 und die Sprühdüse 74 des Mischkopfes 75 oszillieren kann. Während die obere Folie oder Papierbahn 65 sich auf der oberen Deckschicht 76 abstützen kann, sind für die untere, geschlitzte Folie oder Papierbahn 66 zusätzliche Abstützungen 77 angebracht.

Der Oszillationsbereich 78 des Sprühmischkopfes 75 ist mittels eines Linearmaßstabes 79 einstellbar. An der linken und rechten Grenze 80, 81 des Oszillationsbereichs 78, das heißt an den Wendepunkten des Sprühmischkopfs 75, sind geeignete Schwenkvorrichtungen vorgesehen (nicht dargestellt), mit denen der Mischkopf 75 nach außen geschwenkt werden kann, um den gesamten Sprühbereich 82 zu besprühen.

In Figur 5 ist der Schnitt B - B der in der Figur 4 dargestellten Sprühkabine 60 gezeigt. Figur 5 zeigt insbesondere die untere Abwickelrolle 63, die untere Aufwickelrolle 64, die untere Folie oder Papierbahn 66, den mittels eines Messers (Messer 71 in Figur 4) erzeugten Schlitz 72, in dem das Auslaufrohr 73 sowie die Sprühdüse 74 des Mischkopfes 75 traversiert, und die an den Schmalseiten der Sprühkabine angeordneten Absaugvorrichtungen 67, 68, 69, 70.

## Patentansprüche

1. Verfahren zur kontinuierlichen Herstellung von Polyurethan-Sandwichelementen enthaltend eine obere Deckschicht und eine untere Deckschicht und eine dazwischen liegende, mit den Deckschichten fest verbundene Schicht aus zelligem Polyurethan, bei dem
a) die beiden Deckschichten kontinuierlich in Längsrichtung gefördert werden, so dass zwischen den Deckschichten ein in Längsrichtung der Deckschichten ausgedehnter Spalt entsteht, und
b) die Polyurethan-Reaktionsmischung von oben auf die Oberseite der unteren Deckschicht und von unten auf die Unterseite der oberen Deckschicht anteilig aufgetragen wird,
c) anschließend die Deckschichten mit dem Polyurethan-Reaktionsgemisch in einer Formstrecke geführt werden, in der die Dicke des Polyurethan-Sandwichelements eingestellt wird und in der das Polyurethan-Reaktionsgemisch ausreagiert, und
d) anschließend das ausreagierte Polyurethan-Sandwichelement abgezogen wird,
**dadurch gekennzeichnet, dass** das Verhältnis des Massenstroms des auf die obere Deckschicht aufgetragenen Polyurethan-Reaktionsgemisches zu dem Massenstrom des auf die untere Deckschicht aufgetragenen Polyurethan-Reaktionsgemisches zwischen 0,001 und 0,2 liegt, und wobei die Dicke der auf die Unterseite der oberen Deckschicht aufgehangenen Films an Polyurethan-Reaktionsgemisch so gewählt wird dass ein Abtropfen der Polyurethan-Reaktionsgemisches von der oberen Deckschicht auf die untere Deckschicht vermieden wird.

2. Verfahren nach Anspruch 1 **dadurch gekennzeichnet, dass** die Polyurethan-Reaktionsmischung auf die obere Deckschicht mit einem Sprühmischkopf aufgetragen wird und die Sprühzone durch Folien oder Papierbahnen abgegrenzt wird, die mit einem durchschnittlichen Vorschub von 0,1 bis 10 m / h parallel zur oberen Deckschicht bewegt werden

3. Verfahren nach Anspruch 2 **dadurch gekennzeichnet, dass** die beim Sprühen entstehenden Streuaerosole oder Streunebel an den Schmalseiten der Sprühzone abgesaugt werden.

4. Verfahren nach einem der Ansprüche 2 oder 3, **dadurch gekennzeichnet, dass** der Sprühmischkopf quer zur Bewegungsrichtung der oberen Deckschicht oszilliert, wobei die translatorische Fahrstrecke des Sprühmischkopfes kleiner als die Breite der oberen Deckschicht eingestellt wird und wobei der Sprühmischkopf an den Enden der Fahrstrecke nach außen geschwenkt wird, so dass auch die Randbereiche der oberen Deckschicht besprüht werden.

5. Verfahren nach einem der Ansprüche 1 bis 4, bei dem die Reaktionskomponenten zu dem ersten und dem zweiten Mischkopf mit gemeinsamen Dosieraggregaten gefördert werden und die Aufteilung der Massenströme für den ersten und den zweiten Mischkopf durch einen Mengenteiler erfolgt.

6. Verfahren nach Anspruch 5, bei dem die gemeinsamen Dosieraggregate und Mengenteiler verstellbar sind.

7. Verfahren nach einem der Ansprüche 1 bis 6, bei dem in eine oder mehrere der Reaktionskomponenten vor der Vermischung im ersten oder zweiten Mischkopf ein Hilfsstoff, vorzugsweise ein Katalysator, online injiziert wird.

8. Verfahren nach einem der Ansprüche 1 bis 8, bei dem die Polyurethan-Reaktionsmischung auf die obere und die untere Deckschicht zeitlich versetzt aufgetragen wird, so dass das Polyurethan-Reaktionsgemisch auf der oberen Deckschicht länger verweilt als auf der unteren Deckschicht bevor beide Deckschichten in die Formstrecke einlaufen.

9. Verfahren nach Anspruch 1, bei dem das Polyurethan-Reaktionsgemisch im Tauchverfahren auf die obere Deckschicht aufgebracht wird.

10. Vorrichtung (21) zur kontinuierlichen Herstellung von Polyurethan-Sandwichelementen enthaltend eine obere Deckschicht (23), eine untere Deckschicht (22) und eine dazwischen liegende, mit den Deckschichten fest verbundene Schicht aus zelligem Polyurethan nach dem Verfahren nach Anspruch 2 umfassend ein umlaufendes Oberband (24) zur Führung der oberen Deckschicht (23), ein umlaufendes Unterband (25) zur Führung der unteren Deckschicht (22), eine Zuführeinrichtung (29) für die obere Deckschicht (23), eine Zuführeinrichtung (30) für die untere Deckschicht (22), eine Ablängeinrichtung (37) für die Polyurethan-Sandwichelemente, einen oberhalb der unteren Deckschicht (22) angeordneten ersten Mischkopf (33) zum Auftragen des Polyurethan-Reaktionsgemisches auf die untere Deckschicht (22) und einen unterhalb der oberen Deckschicht (23) angeordneten zweiten Mischkopf (34) zum Auftragen des Polyurethan-Reaktionsgemisches auf die obere Deckschicht (23), eine Dosiereinrichtung (38) zur Dosierung der Reaktionskomponenten zu dem ersten Mischkopf (33) und zu dem zweiten Mischkopf (34) sowie Leitungen zwischen der Dosiereinrichtung (38) und dem ersten und dem zweiten Mischkopf (33, 34), wobei der zweite Mischkopf (34) ein Sprühmischkopf ist und wobei die Sprühzone, in der die durch das Sprühen verursachten Streunebel entstehen, durch Folien oder Papierbahnen zur Umgebung hin abgegrenzt ist.

11. Vorrichtung nach Anspruch 10, bei der die Folien bzw. Papierbahnen kontinuierlich oder intermittierend mit einem durchschnittlichen Vorschub von 0,1 bis 10 m / h beweglich sind.

12. Vorrichtung nach Anspruch 11, bei der die Folien oder Papierbahnen parallel zur oberen Deckschicht angeordnet sind und bei der an den offenen Schmalseiten der Sprühzone Absaugvorrichtungen angeordnet sind.

13. Vorrichtung nach einem der Ansprüche 10 bis 12, bei der der zweite Mischkopf (34) quer zur Bewegungsrichtung der oberen Deckschicht (23) oszillierbar ist und die translatorische Fahrstrecke des zweiten Mischkopfs einstellbar ist und der zweite Mischkopf an den Endpunkten der Fahrstrecke nach außen schwenkbar ist.

14. Vorrichtung nach einem der Ansprüche 10 bis 13, bei der der zweite Mischkopf (34) wegfahrbar oder wegschwenkbar sind.

15. Vorrichtung nach einem der Ansprüche 10 bis 14, bei der die Dosiereinrichtung (38) für jede Reaktionskomponente nur ein gemeinsames Dosieraggregat (31, 32) enthält, mit dem die Reaktionskomponente zum ersten und zum zweiten Mischkopf gefördert wird, und einen Mengenteiler (35, 36), mit dem der dosierte Massenstrom an Reaktionskomponente auf den ersten und den zweiten Mischkopf verteilt wird.

16. Vorrichtung nach Anspruch 15, bei dem die Dosieraggregate (31, 32) und Mengenteiler (35, 36) verstellbar sind.

17. Vorrichtung nach einem der Ansprüche 10 bis 16, bei der in den Leitungen zwischen der Dosiereinrichtung und dem ersten und / oder dem zweiten Mischkopf Mittel zur Injektion zusätzlicher Hilfsstoffe angeordnet sind.

## Claims

1. Process for the continuous production of polyurethane sandwich elements comprising an upper outer layer and a lower outer layer and a layer of cellular polyurethane lying in between and which is firmly bonded to the outer layers, in which
a) continuously conveying the two outer layers in the longitudinal direction such that a gap extending in the longitudinal direction of the outer layers is formed between the outer layers, and
b) applying the polyurethane reaction mixture pro rata from a position above the upper side of the lower outer layer and onto the upper side of the lower outer layer, and from a position below the under-side of the upper outer layer and onto the under-side of the upper outer layer,
c) afterwards feeding the outer layers with the polyurethane reaction mixture into a shaping zone in which the thickness of the polyurethane sandwich element is established and in which the polyurethane reaction mixture reacts, and
d) afterwards removing the reacted polyurethane sandwich element,
**characterized in that** the ratio of the material flow of the polyurethane reaction mixture applied to the upper outer layer to the material flow of the polyurethane reaction mixture applied to the lower outer layer is between 0.001 and 0.2, and wherein the thickness of the film of polyurethane reaction mixture applied to the under-side of the upper outer layer is chosen, such that dripping of the polyurethane reaction mixture from the upper outer layer on to the lower outer layer is avoided.

2. Process according claim 1, **characterized in that** applying of the polyurethane reaction mixture to the upper outer layer is carried out by a spray mixing head and the spray zone is demarcated by films or paper webs which move at an average advance of 0.1 to 10 m/h in a plane parallel to the upper outer layer.

3. Process according to claim 2, **characterized in that** any scattered aerosols or scattered mists formed during spraying are sucked off at the narrow sides of the spray zone.

4. Process according one of claims 2 or 3, **characterized in that** the spray mixing head oscillates transversely to the direction of movement of the upper outer layer, wherein the translatory distance covered by the spray mixing head being set smaller than the width of the upper outer layer and the spray mixing head being swivelled outwards at the ends of the distance covered, such that the edge regions of the upper outer layer are also sprayed.

5. Process according to one of claims 1 till 4, in which the reaction components are conveyed to the first and the second mixing head with common metering units and the division of the material flows for the first mixing head and for the second mixing head is effected by a flow distributor.

6. Process according to claim 5, in which the common metering units and flow distributor are adjustable.

7. Process according to one of claims 1 till 6, in which an auxiliary substance, preferably a catalyst, is injected online into one or more of the reaction components before the mixing of the reaction components in the first or second mixing head.

8. Process according to one of claims 1 till 7, in which the polyurethane reaction mixture is applied to the upper and the lower outer layer with a time interval, such that the polyurethane reaction mixture remains longer on the upper outer layer than on the lower outer layer, before both outer layers enter into the shaping zone.

9. Process according to claim 1, in which the polyurethane reaction mixture is applied to the upper outer layer by the dipping process.

10. Apparatus (21) for the continuous production of polyurethane sandwich elements comprising an upper outer layer (23), a lower outer layer (22), and a layer of cellular polyurethane lying in between the outer layers and which is firmly bonded to the outer layers, according to the process of claim 2, comprising a circulating upper belt (24) for guiding the upper outer layer (23), a circulating lower belt (25) for guiding the lower outer layer (22), a feed device (29) for feeding the upper outer layer (23), a feed device (30) for feeding the lower outer layer (22), a length-cutting device (37) for the polyurethane sandwich elements, a first mixing head (33) arranged above the lower outer layer (22) to apply the polyurethane reaction mixture to the lower outer layer (22) and a second mixing head (34) arranged below the upper outer layer (23) to apply the polyurethane reaction mixture to the upper outer layer (23), a metering device (38) to meter the reaction components to the first mixing head (33) and to the second mixing head (34), and conduits between the metering device (38) and the first and the second mixing heads (33, 34), with the second mixing head (34) being a spray mixing head and wherein the spray zone in which the scattered mists caused by the spraying form are demarcated from the environment by films or paper webs.

11. Apparatus according claim 10, in which the films or paper webs are movable continuously or intermittently at an average advance of 0.1 to 10 m/h.

12. Apparatus according claim 11, in which the films or paper webs are in a plane parallel to the upper outer layer and in which suction devices are arranged at the open narrow sides of the spray zone.

13. Apparatus according to one of claims 10 till 12, in which the second mixing head (34) oscillates transversely to the direction of movement of the upper outer layer (23), with the translatory distance covered by the second mixing head being adjustable, and in which the second mixing head can be swiveled outwardly at the end points of the distance covered.

14. Apparatus according to one of claims 10 till 13, in which the second mixing head (34) can be moved away or swivelled away.

15. Apparatus according to one of claims 10 till 14, in which the metering device (38) for each reaction component comprises only one common metering unit (31, 32) with which the reaction component is conveyed to the first and to the second mixing head, and a flow distributor (35, 36) with which the metered material flow of reaction component is distributed to the first and the second mixing head.

16. Apparatus according to claim 15, in which the metering units (31, 32) and flow distributors (35, 36) are adjustable.

17. Apparatus according to one of claims 10 till 16, in which means for injecting additional auxiliary substances are arranged in the conduits between the metering device and the first and/or second mixing head.

## Revendications

1. Procédé de fabrication en continu d'éléments en sandwich de polyuréthane qui contiennent une couche supérieure de recouvrement et une couche inférieure de recouvrement entre lesquelles est située une couche de polyuréthane cellulaire reliée solidairement aux couches de recouvrement et dans lequel :
a) les deux couches de recouvrement sont transportées en continu dans le sens de leur longueur de manière à former entre les couches de recouvrement un interstice allongé dans le sens de la longueur des couches de recouvrement et
b) on applique le mélange réactif de polyuréthane par portions par le haut sur le côté supérieur de la couche inférieure de recouvrement et par le bas sur le côté inférieur de la couche supérieure de recouvrement,
c) les couches de recouvrement sont ensuite amenées avec le mélange réactif de polyuréthane dans un parcours de façonnage dans lequel l'épaisseur de l'élément en sandwich de polyuréthane est définie et dans lequel le mélange réactif de polyuréthane réagit et
d) l'élément en sandwich de polyuréthane qui a réagi est ensuite extrait,
**caractérisé en ce que**
le rapport entre l'écoulement massique du mélange réactif de polyuréthane appliqué sur la couche supérieure de recouvrement et l'écoulement massique du mélange de polyuréthane appliqué sur la couche inférieure de recouvrement est compris entre 0,001 et 0,2 et
l'épaisseur du film de mélange réactif de polyuréthane appliqué sur le côté inférieur de la couche supérieure de recouvrement est sélectionnée de manière à éviter que le mélange réactif de polyuréthane s'égoutte de la couche supérieure de recouvrement jusque sur la couche inférieure de recouvrement.

2. Procédé selon la revendication 1, **caractérisé en ce que** le mélange réactif de polyuréthane est appliqué sur la couche supérieure de recouvrement à l'aide d'une tête de mélange et de projection, la zone de projection étant délimitée par des feuilles ou des bandes de papier qui sont déplacées à un avancement moyen de 0,1 à 10 m/h parallèlement à la couche supérieure de recouvrement.

3. Procédé selon la revendication 2, **caractérisé en ce que** les aérosols de dispersion ou les brouillards de dispersion produits lors de la projection sont aspirés sur les côtés étroits de la zone de projection.

4. Procédé selon l'une des revendications 2 ou 3, **caractérisé en ce que** la tête de mélange et de projection oscille transversalement par rapport à la direction du déplacement de la couche supérieure de recouvrement, la course de translation de la tête de mélange et de projection étant réglée à une valeur inférieure à la largeur de la couche supérieure de recouvrement et la tête de mélange et de projection étant inclinée vers l'extérieur aux extrémités de sa course de telle sorte qu'elle projette également sur les bordures de la couche supérieure de recouvrement.

5. Procédé selon l'une des revendications 1 à 4, dans lequel les composants réactifs sont transportés vers la première et la deuxième tête de mélange par des systèmes de dosage communs, la division des écoulements massiques pour la première et la deuxième tête de mélange s'effectuant par un diviseur de débit.

6. Procédé selon la revendication 5, dans lequel les dispositifs communs de dosage et les diviseurs de débit sont ajustables.

7. Procédé selon l'une des revendications 1 à 6, dans lequel une substance auxiliaire, de préférence un catalyseur, est injectée en ligne dans un ou plusieurs des composants réactifs avant leur mélange dans la première ou la deuxième tête de mélange.

8. Procédé selon l'une des revendications 1 à 7, dans lequel le mélange réactif de polyuréthane est appliqué sur la couche supérieure et la couche inférieure de recouvrement avec un décalage temporel de telle sorte que le mélange réactif de polyuréthane reste plus longtemps sur la couche supérieure de recouvrement que sur la couche inférieure de recouvrement avant que les deux couches de recouvrement pénètrent dans le parcours de façonnage.

9. Procédé selon la revendication 1, dans lequel le mélange réactif de polyuréthane est appliqué sur la couche supérieure par un procédé d'immersion.

10. Dispositif (21) de fabrication en continu d'éléments en sandwich de polyuréthane qui contiennent une couche supérieure de recouvrement (23) et une couche inférieure de recouvrement (22) entre lesquelles est disposée une couche de polyuréthane cellulaire reliée solidairement aux couches de recouvrement par le procédé selon la revendication 2, lequel dispositif comprend une bande supérieure (24) en boucle fermée qui guide la couche supérieure de recouvrement (23), une bande inférieure (25) en boucle fermée qui guide la couche inférieure de recouvrement (22), un dispositif d'amenée (29) pour la couche supérieure de recouvrement (23), un dispositif d'amenée (30) pour la couche inférieure de recouvrement (22), un dispositif (37) de découpe à longueur des éléments en sandwich de polyuréthane, une première tête de mélange (33) disposée au-dessus de la couche inférieure de recouvrement (22) et qui applique le mélange réactif de polyuréthane sur la couche inférieure de recouvrement (22) et une deuxième tête de mélange (34) disposée en dessous de la couche supérieure de recouvrement (23) et qui applique le mélange réactif de polyuréthane sur la couche supérieure de recouvrement (23), un dispositif de dosage (38) qui dose les composants réactifs vers la première tête de mélange (33) et la deuxième tête de mélange (34) ainsi que des conduits situés entre le dispositif de dosage (38) et la première et la deuxième tête de mélange (33, 34), la deuxième tête de mélange (34) étant une tête de mélange et de projection et la zone de projection dans laquelle un brouillard de dispersion est provoqué par la dispersion étant séparée de l'environnement par des feuilles ou des bandes de papier.

11. Dispositif selon la revendication 10, dans lequel les feuilles ou bandes de papier peuvent être déplacées en continu ou par intermittence à un avancement moyen de 0,1 à 10 m/h.

12. Dispositif selon la revendication 11, dans lequel les feuilles ou bandes de papier sont disposées parallèlement à la couche supérieure de recouvrement et dans lequel des dispositifs d'aspiration sont disposés sur les côtés étroits ouverts de la zone de projection.

13. Dispositif selon l'une des revendications 10 à 12, dans lequel la deuxième tête de mélange (34) peut osciller transversalement par rapport à la direction du déplacement de la couche supérieure de recouvrement (23) et en ce que la course de translation de la deuxième tête de mélange peut être réglée, la deuxième tête de mélange pouvant pivoter vers l'extérieur aux points d'extrémité de sa course.

14. Dispositif selon l'une des revendications 10 à 13, dans lequel la deuxième tête de mélange (34) peut être écartée par translation ou pivotement.

15. Dispositif selon l'une des revendications 10 à 14, dans lequel le dispositif de dosage (38) de chaque composant réactif contient uniquement un dispositif de dosage (31, 32) commun avec lequel les composants réactifs sont transportés vers la première et la deuxième tête de mélange et un diviseur de débit (35, 36) avec lequel l'écoulement massique dosé de composants réactifs est réparti entre la première et la deuxième tête de mélange.

16. Dispositif selon la revendication 15, dans lequel le dispositif de dosage (31, 32) et le diviseur de débit (35, 36) sont réglables.

17. Dispositif selon l'une des revendications 10 à 16, dans lequel des moyens d'injection de substances auxiliaires supplémentaires sont disposés dans les conduits situés entre le dispositif de dosage et la première et/ou la deuxième tête de mélange.
